(19) Europäisches Patentamt / European Patent Office / Office européen des brevets

(11) **EP 4 249 544 A1**

(12) **EUROPEAN PATENT APPLICATION**

(43) Date of publication:
27.09.2023  Bulletin 2023/39

(21) Application number: 23163672.1

(22) Date of filing: **23.03.2023**

(51) International Patent Classification (IPC):
**C08J 9/00** (2006.01)          **C08J 9/12** (2006.01)
**C08J 9/36** (2006.01)

(52) Cooperative Patent Classification (CPC):
**C08J 9/0066; C08J 9/009; C08J 9/122; C08J 9/36;**
C08J 2203/06; C08J 2367/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.03.2022   JP 2022046751**

(71) Applicant: **Ricoh Company, Ltd.**
**Tokyo 143-8555 (JP)**

(72) Inventor: **KUMAI, Yoshimitsu**
**Tokyo, 143-8555 (JP)**

(74) Representative: **Marks & Clerk LLP**
**15 Fetter Lane**
**London EC4A 1BW (GB)**

(54) **POLYLACTIC ACID RESIN COMPOSITION, FOAM SHEET, METHOD FOR PRODUCING THE FOAM SHEET, PRODUCT INCLUDING THE FOAM SHEET, AND MOLDED BODY**

(57)    A polylactic acid resin composition is provided that contains a polylactic acid resin and inorganic particles. The polylactic acid resin composition has a weight average molecular weight of 250,000 to 600,000, and the inorganic particles have a hydrophobicity of 65% by volume or higher and a carbon content of 4% by mass or more.

**Description**

BACKGROUND

Technical Field

The present disclosure relates to a polylactic acid resin composition, a foam sheet, a method for producing the foam sheet, a product including the foam sheet, and a molded body.

Related Art

Plastic products processed into various forms such as bags and containers are widely distributed. However, generally plastic products are difficult to decompose in nature and therefore problematic in environmental pollution and waste disposal after the end of use. In recent years, growing environmental awareness and interest in sustainable society have prompted development of biodegradable plastic materials which can be obtained from a biomass feedstock.
Among biodegradable plastics, polylactic acid is attracting attention as a substitute material for undegradable plastics because of similar properties to those of polystyrene and the like conventionally used. As one use form of polystyrene, foamed polystyrenes having lightness, heat insulating property, and other functions, made by foaming polystyrene, are widely used. As an environment-friendly substitute material for such a foamed polystyrene, foamed polylactic acids made of polylactic acid that is a biodegradable plastic are known.
Japanese Unexamined Patent Application Publication No. 2021-116412 describes a foam sheet containing an aliphatic polyester resin and a filler, in which the filler has a hydrophobicity of 50% by mass or higher and a pH of 6.5 or lower.
It is disclosed therein that this foam sheet has uniform and fine cells and achieves both strength and flexibility.

SUMMARY

An object of the present invention is to provide a polylactic acid resin composition that makes it possible to form a foam sheet excellent in a surface property, a heat insulating property, and environmental hygiene and suitable as a food container material.
The above problems are solved by the following polylactic acid resin composition according to an embodiment of the present invention.
The polylactic acid resin composition contains a polylactic acid resin and inorganic particles. The polylactic acid resin composition has a weight average molecular weight of 250,000 to 600,000, and the inorganic particles have a hydrophobicity of 65% by volume or higher and a carbon content of 4% by mass or more.
Use of the polylactic acid resin composition according to an embodiment of the present invention makes it possible to form a foam sheet excellent in a surface property, a heat insulating property, and environmental hygiene and suitable as a food container material.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic diagram illustrating an example of a kneader used for producing a polylactic acid resin composition according to the present disclosure.
FIG. 2 is a schematic diagram illustrating an example of a foam sheet forming device used for producing a foam sheet according to the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity.

However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

[Foam Sheet]

Although Japanese Unexamined Patent Application Publication No. 2021-116412describes that the foam sheet disclosed therein achieves both strength and flexibility, the foam sheet may not sufficiently achieve both a surface property (surface smoothness) for satisfying laminability, sealability, and fittability, and a heat insulating property.

The foam sheet obtained from the resin composition according to the present embodiment improves such disadvantage of the conventional technology.

The polylactic acid resin composition according to the present embodiment contains a polylactic acid resin and inorganic particles. The polylactic acid resin composition optionally contains other components.

<Polylactic Acid Resin>

The polylactic acid resin is a biodegradable plastic, and the foam sheet made of the polylactic acid resin composition is a low environmental load material and can be used as a substitute material for polystyrene foam sheets.

Use of the polylactic acid resin makes it possible to produce a sustainable and biodegradable sheet.

The polylactic acid resin composition constituting the foam sheet according to the present embodiment has a weight average molecular weight of 250,000 to 600,000.

The weight average molecular weight of the polylactic acid resin composition is preferably 200,000 to 400,000, more preferably 250,000 to and 350,000. When the weight average molecular weight is 200,000 or more, the resin composition has an appropriate melt viscosity, thereby preventing union of cells and breakage of cells. When the weight average molecular weight is 400,000 or less, the resin composition has an appropriate melt viscosity, thereby improving dischargeability of the resin from an extruder.

Examples of the polylactic acid include, but are not limited to, a copolymer of D-lactic acid and L-lactic acid, a homopolymer of either D-lactic acid (D-isomer) or L-lactic acid (L-isomer), and ring-opened polymers of one or more of lactides selected from the group consisting of a D-lactide (D-isomer), an L-lactide (L-isomer), and a DL-lactide. Each of these polylactic acids may be used alone or in combination of two or more types.

When a copolymer of D-lactic acid and L-lactic acid is used as polylactic acid, a ratio of lesser optical isomer of the D-lactic acid and L-lactic acid is preferably 5 mol% or less, more preferably 1 mol% or less. As the polylactic acid, a synthetic product or a commercially available product may be used as appropriate. When the ratio of the lesser optical isomer of the D-lactic acid or L-lactic acid is within the above range, the foam sheet exhibits moderate crystallinity, and structural fixation by crystallization on a mold during thermo-molding and impartment of heat resistance to a molded product can be achieved in a realistic molding time, so that the molded product can be desirably used as a food container. Herein, "moderate crystallinity" means a fast crystallization speed of the polylactic acid resin composition or the foam sheet.

The crystallization speed can be evaluated e.g. according to a recrystallization enthalpy of the polylactic acid resin composition or the foam sheet, as measured by a differential scanning calorimetry (DSC) at a temperature dropping rate of 10°C/min. In the present embodiment, it is preferable that the polylactic acid resin composition or the foam sheet has a recrystallization enthalpy of 30 J/g or higher. When the recrystallization enthalpy is within the above range, structural fixation by crystallization on a mold during thermo-molding of the foam sheet and impartment of heat resistance to a molded product can be achieved in a realistic molding time.

The upper limit of the recrystallization enthalpy is, but not limited to, approximately 40 J/g to 50 J/g.

On the other hand, the foam sheet preferably has a cold crystallization enthalpy of 20 J/g or higher. When the recrystallization enthalpy is 30 J/g or higher and the cold crystallization enthalpy is 20 J/g or higher, the crystallization speed of the foam sheet is fast but a sufficient room for crystallization is left.

In the thermo-molding, the foam sheet is stretched at a temperature of not lower than the glass transition point, and there is a tendency that the higher the crystallinity of the foam sheet is, the smaller the breaking elongation is. When the cold crystallization enthalpy of the foam sheet is within the aforementioned range, it is possible to prevent defects such as fracture of the molded product due to unstretched foam sheet during the thermo-molding, and poor shaping of the sheet due to impossibility of following along a mold. The upper limit of the cold crystallization enthalpy is, but not particularly limited to, approximately 40 J/g to 50 J/g.

The cold crystallization enthalpy can be adjusted to within the above range by appropriately setting a temperature of the entire foaming device or by cooling the extruded foam sheet. As a tendency, the cold crystallization enthalpy can be adjusted to within the above range by setting the minimum temperature of the foaming device to within a range from a melting point to -20°C and quenching the extruded foam sheet, depending on a concentration of a foaming agent and a type of the polylactic acid resin composition.

In the present embodiment, the cold crystallization enthalpy refers to an exothermic peak area that appears at 60°C to 100°C of a DSC curve of the foam sheet scanned from 25°C to 200°C at a temperature rising rate of 10°C/min (1st heating). The recrystallization enthalpy refers to an exothermic peak area that appears on a DSC curve obtained by scanning the foam sheet or resin composition while increasing the temperature from 25°C to 200°C at a temperature rising rate of 10°C/min, followed by keeping the temperature at 200°C for 1 minute, and then decreasing the temperature from 200°C to 25°C at a temperature dropping rate of 10°C/min (1st cooling). When calculating the peak area, the baseline of integration is defined as a straight line connecting between the start point and the end point of the exothermic peak.

The DSC measurement device is not particularly limited, but, for example, Q-2000 manufactured by TA Instruments can be used for measurement. First, about 10 mg of a sample is weighed out and flattened by pressing the sample (load of about 500 gf) on a hot plate heated to 65°C using a copper round bar (about $\varphi$20 mm, also heated to 65°C) for 1 to 3 seconds. This flattening is intended to improve a thermal contact between the sample and the sample pan and to measure the cold crystallization enthalpy with high accuracy. Next, the sample is scanned while increasing the temperature from 25°C to 200°C at a temperature rising rate of 10°C/min (1st heating), followed by keeping the temperature at 200°C for 1 minute, and then decreasing the temperature from 200°C to 25°C at a temperature dropping rate of 10°C/min (1st cooling).

When a copolymer of D-lactic acid and L-lactic acid is used as a polylactic acid, ratios of the D-lactic acid and L-lactic acid can be confirmed by a liquid chromatography analysis using an optically active column.

The measurement procedure is as follows.

The foam sheet is freeze-crushed, and 200 mg of the foam sheet powder is weighed out into a conical flask, to which 30 ml of 1 N sodium hydroxide aqueous solution is added. Then, the conical flask is heated to 65°C while shaking to completely dissolve the polylactic acid. Subsequently, the solution is adjusted at pH 4 to 7 using 1N hydrochloric acid and diluted to a predetermined volume using a volumetric flask to obtain a polylactic acid solution.

Then, the polylactic acid solution is filtered through a 0.45 $\mu$m membrane filter and analyzed by a liquid chromatography. Based on the obtained chart, an area ratio is calculated from a D-isomer peak and an L-isomer peak, and this area ratio is used as an abundance ratio to calculate amounts of the D-isomer and L-isomer. An arithmetic mean value of the results obtained by performing the above operation three times is defined as the amount of the D-isomer or the L-isomer of the lactic acid constituting the polylactic acid in the foam sheet.

The measurement device and the measurement conditions are not particularly limited, but the measurement can be conducted e.g. as follows.

A high performance liquid chromatography (HPLC) device (liquid chromatography): trade name "PU-2085 PLUS TYPE SYSTEM" manufactured by JASCO Corporation

Column: trade name "SUMICHIRALOA 5000" ($\varphi$4.6 mm $\times$ 250 mm) manufactured by Sumika Chemical Analysis Service, Ltd.
Column temperature: 25°C
Mobile phase: mixture of 2 mM $CuSO_4$ aqueous solution and 2-propanol ($CuSO_4$ aqueous solution: 2-propanol (volume ratio) = 95:5)
Mobile phase flow rate: 1.0 ml/min
Detector: UV 254 nm
Injection volume: 20 microliters

The foam sheet is subjected to the aforementioned measurement. When an area of the isomer having a larger peak area of the D- and L-isomer peak areas is 95% or larger based on the total peak area of the D- and L-isomers, it is assumed that the ratio of either the D- or L-isomer constituting the polylactic acid is 95 mol% or more based on the polylactic acid.

From the viewpoint of biodegradability, a content of the polylactic acid resin in the polylactic acid resin composition is preferably 80% by mass or more, more preferably 95% by mass or more.

<Measurement Method for Content of Polylactic Acid Resin>

The content of the polylactic acid resin can be calculated from the ratio of materials to be added. If ratios of the materials are unknown, for example, the material is compared with a known polylactic acid resin as a reference sample by performing a spectrum area ratio analysis in a nuclear magnetic resonance (NMR) measurement and the following gas chromatography mass spectrometry (GCMS) analysis, so that components can be identified. The method can be optionally combined with other analytical methods for calculation.

- Measurement by GCMS Analysis -
- GCMS: QP2010 manufactured by Shimadzu Corporation; auxiliary equipment: PY 3030D manufactured by Frontier Laboratories Ltd.
- Separation column: ULTRA ALLOY UA5-30M-0.25F manufactured by Frontier Laboratories Ltd.
- Sample heating temperature: 300°C
- Column oven temperature: 50°C (kept for 1 minute) -> temperature rising rate: 15°C/min -> 320°C (for 6 minutes)
- Ionization method: Electron Ionization (E.I.) method
- Detected mass range: 25 to 700 (m/z)

<<Weight Average Molecular Weight of Polylactic Acid Resin>>

A weight average molecular weight of the polylactic acid resin composition according to the present embodiment can be measured by gel permeation chromatography (GPC). For example, a foam sheet is put into a tetrahydrofuran (THF) solution and heated to 65°C to dissolve the polylactic acid. Then, the solution is filtered through a 0.45 $\mu$m membrane filter to remove undissolved matters such as inorganic particles, and the resulting solution is subjected to a measurement.

Device: GPC (manufactured by TOSOH CORPORATION), detector: differential refractive index meter (RI), measurement temperature: 40°C
Mobile phase: tetrahydrofuran, flow rate: 0.45 mL/min.

The weight average molecular weight (Mw) refers to a weight average molecular weight measured by a gel permeation chromatography (GPC) using a calibration curve of a polystyrene sample having a known molecular weight as a reference. As the column, columns having exclusion limits of 60,000, 20,000, and 10,000 connected in series were used.

<Inorganic Particle>

The inorganic particles (hereinafter, referred to as "foam nucleating agent" in some cases) are blended as a component of the polylactic acid resin composition for the purpose of adjusting the foamed state (size, amount, and arrangement of cells) of the foam sheet, and the like.

The inorganic particles according to the present embodiment have a hydrophobicity of 65% by volume or higher and a carbon content of 4% by mass or more.

Since such inorganic particles have a foam nucleating agent surface suitable for foaming using a foaming agent (particularly, $CO_2$) for a polylactic acid resin composition, the resin composition can be microfoamed.

In the present disclosure, the "inorganic particles" refer to a particulate inorganic material having a surface modified with an organic material.

<<Hydrophobicity>>

The hydrophobicity according to the present embodiment is determined by the methanol wettability method (MW method). The higher the hydrophobicity value according to the MW method is, the higher the hydrophobicity is, and the lower the value is, the higher the hydrophilicity is.

The hydrophobicity is determined according to the following equation by a process that inorganic particles are added to V1 [mL] of pure water, to which methanol is dripped while stirring, and an amount of methanol for the inorganic particles to become wet and disperse in the liquid is defined as V2 [mL].

$$\text{Hydrophobicity [\% by volume]} = \{V2/(V1+V2)\} \times 100$$

The hydrophobicity according to the present embodiment refers to a value obtained by a measurement method described below.

- Measurement Method -

First, 50 mg of inorganic particles is weighed out into a 50-mL screw tube (manufactured by AS ONE CORPORATION, 9-852-09, No. 7), to which 5 ml of pure water (V1 [mL]) is added to prepare a sample. A stirrer ($\varphi$6 mm × 20 mm, oval) is gently put into the sample, and the sample is gently stirred by a magnetic stirrer (MX-1, manufactured by SIBATA SCIENTIFIC) so as not to cause vortexes on water surface.

The container mouth is covered with perforated Parafilm, to which methanol (manufactured by Kanto Chemical Co., Inc., special grade, >99.8%) is added at a rate of 0.3 ml/min such that methanol runs along the wall surface of the container using a 25-ml burette (manufactured by AS ONE CORPORATION, allowance: ±0.03 ml). The amount of methanol (V2 [mL]) for the inorganic particles to disperse in the liquid is measured.

The measurement is repeated three times, the hydrophobicity is calculated according to the following equation, and the arithmetic mean value is defined as the hydrophobicity value.

$$\text{Hydrophobicity [\% by volume]} = \{V2/(V1+V2)\} \times 100$$

<<Carbon Content>>

A carbon content according to the present embodiment refers to an amount of carbon (% by mass) contained in the inorganic particles.

The carbon content according to the present embodiment refers to a value obtained by the measurement method described below in accordance with ISO 3262-20.

- Measurement Method -

The carbon content is calculated by completely burning the inorganic particles at 800°C and then detecting and quantifying carbon dioxide in the combustion gas component using a thermal conductivity detector (TCD) gas chromatography.

- Bulk Density -

A bulk density of the foam sheet according to the present embodiment is measured as follows.

The foam sheet is allowed to stand under an adjusted environment with a relative humidity of 50% at 23°C for at least 24 hours, and a 50 mm × 50 mm test piece is cut out. The bulk density of the cut test piece is determined by an in-liquid weighing method using an automatic gravimeter (e.g. DSG-1, manufactured by Toyo Seiki Seisaku-sho, Ltd.).

In this measurement method, a weight (gf) of the foam sheet in atmosphere is precisely weighed, then a weight (gf) of the foam sheet in water is precisely weighed, and the bulk density is calculated according to the following equation.

$$\text{Bulk density [g/cm}^3\text{]} = \text{liquid density [g/cm}^3\text{]} \times \text{sample weight [gf] in atmosphere /}$$

$$\text{(sample weight [gf] in atmosphere - sample weight [gf] in liquid)}$$

Examples of the inorganic particles include, but are not limited to, talc, kaolin, calcium carbonate, layered silicate, zinc carbonate, wollastonite, silica, alumina, magnesium oxide, calcium silicate, sodium aluminate, calcium aluminate, sodium alumino silicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber, and carbon fiber.

Above all, inorganic particles having an active hydrogen group are preferable, and silica is particularly preferable, because a hydrophobicity and a carbon content suitable for the present embodiment can be achieved by surface treatment.

The silica contains silicon dioxide represented by $SiO_2$ as a main component. According to processes for producing silica particles, silica particles can be broadly classified into two types: dry-processed silica and wet-processed silica. In the present embodiment, silica particles produced by both processes can be used.

Preferably, the inorganic particles are surface-treated with a reactive compound such as a silane coupling agent and a titanate coupling agent, more preferably with a reactive compound such as organopolysiloxane (e.g., silicone oil) and alkylsilane having 16 or more carbon atoms.

The inorganic particles preferably have an average particle diameter of 5 nm (0.005 $\mu$m) to 100 nm (0.1 $\mu$m).

If the average particle diameter is larger than 100 nm, the inorganic particles become too large to ignore relative to the thickness of the cell wall, and the inorganic particles in a surface state suitable for the present embodiment are foreign matters for the polylactic acid resin, and therefore the cell wall is broken, resulting in poor surface properties. If the average particle diameter is less than 5 nm, dispersibility is poor, and it is difficult to obtain the effect of reducing the amount of the inorganic particles despite of difficulty of handling.

The average particle diameter of the inorganic particles may be calculated from Brunauer Emmett Teller (BET) specific surface area, conveniently assuming that the inorganic particles have a true spherical shape. In this case, the average particle diameter is calculated according to the following equation.

$$\text{Average particle diameter [nm]} = 1000 \times 3 \, / \, (\text{BET specific surface area } [m^2/g] \times \text{true specific gravity } [g/cm^3])$$

It is preferable that the inorganic particles have a hydrophobicity of 65% by volume or higher and a carbon content of 4% by mass or more. If the hydrophobicity and carbon content of the inorganic particles are within the above range, when using a nonpolar foaming agent such as carbon dioxide and nitrogen, the hydrophobic surface of the inorganic particles desirably act as a foam nucleating field, resulting in efficient foam nucleation. It is preferable that the inorganic particles have a hydrophobicity of 68% by volume or lower and a carbon content of 8.9% by mass or less. As a tendency, if the hydrophobicity is within the above range, aggregation of the inorganic particles can be prevented. However, since the degree of the aggregation significantly depends on a kneading condition and a kneader to be applied, the effect of the present invention is not limited to the aforementioned range. As a tendency, if the carbon content is within the above range, an amount of surface treating agent-derived components released from the inorganic particles can be reduced.

According to classical nucleation theory, the smaller the contact angle between the cell nucleus and the inorganic particle surface is, the lower the activation energy for the foam nucleation is, and nucleation proceeds smoothly. Therefore, the chemical properties of the inorganic particle surface seem to greatly depend on the hydrophobicity. However, the examination resulted in a tendency that a high hydrophobicity alone was ineffective as a foam nucleating agent. Although the detailed reasons were unclear, the foam nucleating agent showed a remarkable effect when the hydrophobicity was 65% by volume or higher and a carbon content was 4% by mass or more.

It is considered that, when the carbon content is 4% by mass or more, a certain volume of region with a high affinity for the foaming agent is generated on the surface layer of the inorganic particles. When the concentration of the foaming agent is low as in the present embodiment, it is imagined that a rate of diffusion of the foaming agent is limited due to the foam nucleation. It is considered that, in a certain volume of a region with a high affinity for the foaming agent on the surface of the inorganic particles, the concentration of the foaming agent is substantially higher than in the other region, and this affinity advantageously works for providing the foaming agent during the foam nucleation.

Even after production of the foam sheet, the inorganic particles can be evaluated for the aforementioned hydrophobicity, carbon content, and the like by a process that the foam sheet is dissolved in a solvent, the polylactic acid resin component is filtered out, from which the inorganic particles are taken out, and the resulting inorganic particles are analyzed.

If the above operation is difficult, a preliminary operation may be carried out, in which the foam sheet is burned in an electric furnace or the like, and the inorganic particles are taken out as an ash content.

The content of the inorganic particles in the resin composition can be selected as appropriate depending on an intended purpose unless physical properties of the foam sheet are impaired, but the content is preferably 0.1% by mass or more and 10% by mass or less, more preferably 0.25% by mass or more and 2.5% by mass or less. If the content of the inorganic particles is 0.1% to 10% by mass, it is possible to prevent problems such as aggregation of the inorganic particles, an increased specific gravity of the resin composition, and deteriorated lightness of the foam sheet. If the content of the inorganic particles is 0.25% by mass or more and 2.5% by mass or less, the amount of the foam nucleating agent can be decreased, the environmental load can be reduced, and furthermore the foam sheet can be prevented from becoming brittle.

<Other Components>

Other components are not particularly limited as long as the components are normally contained in the foam sheet, and can be selected as appropriate depending on an intended purpose. Examples of other components include, but are not limited to, chain extenders (crosslinker).

The chain extender is not particularly limited as long as the chain extender is a compound reactive with a hydroxyl group and/or a carboxylic acid group of a polylactic acid. For example, an epoxy-based chain extender (chain extender having an epoxy group) or an isocyanate-based chain extender (chain extender having an isocyanate group) is desirably used. For these chain extenders, for example, an epoxy-functional (meth)acryl-styrene-based chain extender having two or more epoxy groups in its molecule, and a polyisocyanate having two or more isocyanate groups in its molecule are preferable. An epoxy-functional (meth)acryl-styrene-based chain extender having three or more epoxy groups in its molecule, and a polyisocyanate having three or more isocyanate groups in its molecule are more preferable because they make it possible to introduce a branched structure into polylactic acid to efficiently improve a melt strength and to reduce released unreacted products. By using such a chain extender, union of cells and breakage of cells can be suppressed to improve a foaming ratio.

Herein, the epoxy-functional (meth)acryl-styrene-based chain extender having two or more epoxy groups in its molecule refers to a polymer obtained by copolymerizing a (meth)acrylic monomer having epoxy groups with a styrene monomer.

Examples of the (meth)acrylic monomer having epoxy groups include, but are not limited to, monomers containing 1,2-epoxy groups, such as glycidyl acrylate and glycidyl methacrylate. Examples of the styrene monomer include, but are not limited to, styrene and α-methylstyrene.

The epoxy-functional (meth)acryl-styrene-based chain extender having two or more epoxy groups in its molecule may contain a (meth)acrylic monomer having no epoxy group in its copolymerization components. Examples of such a (meth)acrylic monomer include, but are not limited to, methyl acrylate, ethyl acrylate, propyl acrylate, butyl acrylate, cyclohexyl acrylate, methyl methacrylate, ethyl methacrylate, propyl methacrylate, butyl methacrylate, and cyclohexyl methacrylate.

Examples of the polyisocyanate having two or more isocyanate groups in its molecule include, but are not limited to, aliphatic diisocyanates such as 1,6-hexamethylene diisocyanate, 3-isocyanatemethyl-3,5,5-trimethylcyclohexyl isocyanate (isophorone diisocyanate), 1,4-tetramethylene diisocyanate, 2,4,4-trimethylhexamethylene diisocyanate, 2,2,4-trimethylhexamethylene diisocyanate, dicyclohexylmethane-4,4'-diisocyanate, methylcyclohexyl-2,4-diisocyanate, methylcyclohexyl-2,6-diisocyanate, xylylene diisocyanate, 1,3-bis(isocyanate) methylcyclohexane, tetramethylxylylene diisocyanate, transcyclohexane-1,4-diisocyanate, and lysine diisocyanate; alicyclic polyisocyanates such as isophorone diisocyanate, hydrogenated diphenylmethane diisocyanate, hydrogenated tolylene diisocyanate, hydrogenated xylylene diisocyanate, hydrogenated tetramethylxylylene diisocyanate, and cyclohexane diisocyanate; aromatic diisocyanates such as 2,4-toluylene diisocyanate, 2,6-toluylene diisocyanate, diphenylmethane-4,4'-isocyanate, 1,5'-naphthene diisocyanate, tridine diisocyanate, diphenylmethylmethane diisocyanate, tetraalkyl diphenylmethane diisocyanate, 4,4'-dibenzyl diisocyanate, and 1,3-phenylene diisocyanate; triisocyanate compounds such as lysine ester triisocyanate, triphenylmethane triisocyanate, 1,6,11-undecane triisocyanate, 1,8-isocyanate-4,4-isocyanate methyloctane, 1,3,6-hexamethylene triisocyanate, bicycloheptane triisocyanate, an adduct of trimethylolpropane with 2,4-toluylene diisocyanate, and an adduct of trimethylolpropane with diisocyanate such as 1,6-hexamethylene diisocyanate; and denatured polyisocyanate compounds obtained by reacting a polyhydric alcohol such as glycerol and pentaerythritol with the aliphatic and aromatic diisocyanate compounds, and the triisocyanate compounds, or other compounds. Each of these polyisocyanates may be used alone or in combination of two or more types.

The addition amount of the chain extender also depends on the molecular weight or the molecular weight distribution of the polylactic acid for use. In a case of a large amount of polylactic acid having a low molecular weight, the addition amount of the chain extender tends to be increased to impart a melt strength suitable for foaming. However, since the increased amount of the chain extender tends to result in inferior biodegradability, it is preferable that the amount of the chain extender blended in the foam sheet according to the present embodiment is 2% by mass or less based on 100% by mass as the total amount of the polylactic acid and the chain extender.

Examples of other chain extenders include, but are not limited to, a compound having two or more oxazoline groups in its molecule and a compound having two or more carbodiimide groups in its molecule (polycarbodiimide-based chain extender).

The chain extender makes it possible to provide a melt tension and adjust the foaming ratio of the polylactic acid foam sheet. Examples of other means for providing the melt tension include, but are not limited to, a method of crosslinking the resin composition by an electron beam or the like, and a method of blending another resin composition having a high melt tension or a small amount of a high molecular weight component.

Besides the above components, examples of other components include, but are not limited to, additives such as heat stabilizers, antioxidants, plasticizers, and lubricants. Each of these polylactic acids may be used alone or in combination of two or more types.

A content of other components is preferably 2% by mass or less based on the total amount of organic matters in the foam sheet. In this case, biodegradability and recyclability are improved.

<Physical Properties of Foam Sheet>

It has been already known that foams have a high heat insulating property, and that there is a tendency that the smaller the cell diameter is, the better the heat insulating property is. Also, when the cell diameter is large, the sheet is rigid and therefore causes problems, e.g. the sheet is folded and wrinkled when wound into a roll from the extruder.

The cell diameter according to the present embodiment means a median diameter.

The cell diameter of the foam sheet according to the present embodiment is preferably 300 $\mu$m or smaller from the viewpoint of improving the heat insulating property. As a tendency, when the cell diameter is within the above range, moderate flexibility is provided to the sheet, and wrinkle caused during winding can be reduced.

From the viewpoint of making the foam sheet according to the present embodiment suitable for thermo-molding, it is preferable that the recrystallization enthalpy is 30 J/g or higher, and the cold crystallization enthalpy is 20 J/g or higher, as measured by DSC at a temperature rising/dropping rate of 10°C/min.

From the viewpoint of improving the biodegradability, the ratio of the polylactic acid resin in the foam sheet according to the present embodiment is preferably 95% by mass or more based on the polylactic acid resin composition.

The method for measuring the cell diameter (median diameter) of the foam sheet is not particularly limited and can be selected as appropriate depending on an intended purpose.

For example, the foam sheet is cut along a cross section using a sharp razor (e.g. 76 RAZOR, manufactured by Nisshin-EM K.K.), and the cross section of the foam sheet is observed using a scanning electron microscope (SEM), VE-9800 manufactured by KEYENCE CORPORATION. To obtain images suitable for an image analysis described below, a magnification is adjusted such that the number of cells in an observation area is several tens to several hundreds (e.g. if the cell diameter is about 100 $\mu$m, the magnification is 50x). Optionally, a plurality of visual fields may be photographed, and the images may be linked for an image analysis.

The obtained images are subjected to area division by a watershed method (morphological segmentation) e.g. using MORPHOLIB J plug-in of an image analysis software IMAGE J. In this case, a tolerance is adjusted for each image such that the segmentation is reasonable (e.g. 60). A dividing line of the area is output as a binary image, and a cell area distribution is determined by a particle diameter analysis function of the image analysis software. In this case, cells in contact with the edge of the image are excluded from the analysis. A cumulative distribution of the cell areas is analyzed using a spreadsheet software or the like to determine an area where the cumulative distribution is 50%, and an equivalent circular diameter of the area is calculated and used as the cell diameter (median diameter).

A bulk density of the foam sheet is set to 0.03 g/cm$^3$ or higher and 0.31 g/cm$^3$ or lower.

If the bulk density of the foam sheet is within this range, a foam sheet having an excellent balance between the surface property, the strength, and the lightness can be obtained.

(Molded Body)

The foam sheet according to the present embodiment can be thermo-molded into a molded body.

The foam sheet according to the present embodiment may be used as a product described later, or letters or the like may be directly printed on the sheet, or the sheet may be processed using a mold to obtain a product.

The sheet processing method using the mold is not particularly limited. Conventionally-known methods for processing thermoplastic resins can be used, such as vacuum molding, pressure molding, vacuum pressure molding, and press molding.

(Product)

The product according to the present embodiment includes the foam sheet according to the present embodiment and optionally, further includes other components.

The aforementioned other components are not particularly limited as long as the components can be used for conventional resin products, and can be selected as appropriate depending on an intended purpose.

Examples of the aforementioned products (also referred to as "consumer goods") include, but are not limited to, bags, packaging containers, trays, tableware, cutlery, stationery, and furthermore cushioning materials as daily commodities. The concept of the products includes not only an original fabric obtained by rolling the sheet as an intermediate for processing a product, and a product as a single body, but also a product including parts made of a product like a handle of a tray or a product like a tray including a handle.

Examples of the bags include, but are not limited to, plastic bags, shopping bags, garbage bags.

Examples of the stationery include, but are not limited to, clear files and stickers.

Because of the excellent surface property and heat insulating property, the product molded using the foam sheet according to the present embodiment can also be applied to applications other than daily commodities, and can be widely applied to applications such as sheets and packaging materials for industrial materials, agricultural articles, food products, pharmaceuticals, cosmetics, and the like.

The foam sheet according to the present embodiment is useful for applications that can take advantage of the biodegradability of the foam sheet, particularly useful as a packaging material for food products, and medical sheets for cosmetics, pharmaceuticals, or the like. For example, when the foam sheet is used as a food packaging material, containers soiled with food can be disposed into a biodegrading device without washing (wasting a large amount of water). Furthermore, it is possible to reduce inefficient treatments in which food products whose composition is mostly water are incinerated (wasting energy for water evaporation).

(Production Method for Foam Sheet)

Carbon dioxide is suitable as a foaming agent because of a higher safety and a lower environmental load than hydrocarbon-based foaming agents such as butane, but carbon dioxide has a higher vapor pressure and a higher diffusion rate in polylactic acid compared to hydrocarbon-based foaming agents. Thus, when carbon dioxide is used as a foaming agent to produce a foam sheet, foaming tends to rapidly occur and impair surface properties at a high foaming agent concentration providing fine cells.

Food containers and the like should have functions related to surface properties such as laminability, sealability, and fittability, and therefore cannot accept poor surface properties. There have been known methods of decreasing the foaming agent concentration as a means for foaming without impairment of surface properties, but in the methods, the cell diameter is increased due to a low degree of supersaturation. The increased cells impair the appearance of the sheet and properties related to the cell diameter, such as heat insulating property.

Consequently, the conventional methods have had a problem that properties related to the surface properties and the cell diameter are traded-off.

Use of a foam nucleating agent having a hydrophobicity of 65% by volume or higher and a carbon content of 4% by mass or more suitable for foaming the polylactic acid resin composition with $CO_2$ makes it possible to decrease a cell diameter even in a low foaming agent concentration area with surface properties difficult to impair, and obtain a sheet achieving both the surface properties and the heat insulating property.

Embodiments of the present invention will be explained below. Embodiments of the present invention have the following characteristics in relation to production of an extruded foam sheet made of a polylactic acid resin composition.

- Extrusion foaming is performed in an area with a low foaming agent concentration so as not to impair the surface properties of the foam sheet.
- A foam nucleating agent having a high hydrophobicity and a high carbon content is added so as not to increase the cell diameter of the foam sheet.
- A dispersion operation is performed by kneading at a temperature lower than the melting point of the polylactic acid resin in the presence of a compressible fluid so as to obtain the effect with a small amount of foam nucleating agent.

In short, characteristically, although a foam nucleating agent having a hydrophobicity of 65% by volume or higher and a carbon content of 4% by mass or more suitable for foaming the polylactic acid resin composition with $CO_2$ is used, such a foam nucleating agent tends to have poor dispersibility in the polylactic acid resin composition, therefore the cell diameter can be decreased with a small amount of foam nucleating agent even in a low foaming agent concentration area with surface properties difficult to impair by improving the dispersibility of the foaming nucleating agent through a kneading operation at a temperature lower than the melting point of the polylactic acid resin in the presence of compressible fluid, so that a sheet achieving both the surface properties and the heat insulating property can be obtained.

The production method for the foam sheet according to the present embodiment makes it possible to obtain a low environmental load foam polylactic acid (PLA) sheet that has an excellent heat insulating property without impairing the surface properties.

The production method for the foam sheet according to the present embodiment includes the following processes.

- A process of kneading the polylactic acid resin, the inorganic particles, and the chain extender at a temperature lower than the melting point of the polylactic acid resin in the presence of a compressible fluid to obtain a polylactic acid resin composition.
- A process of foaming the polylactic acid resin composition by vaporizing the compressible fluid from the polylactic acid resin composition.

The characteristics of the embodiments of the present invention described above will be explained below in detail with reference to drawings.

<Kneading Process>

In the kneading process, the polylactic acid resin and the inorganic particles are melted and kneaded in the presence of a compressible fluid.

In the kneading process, a foaming agent may be added in addition to the polylactic acid resin and the inorganic particles to promote the foaming more efficiently.

The mixture of the polylactic acid resin, the inorganic particles, and the foaming agent before foaming is referred to as a polylactic acid resin composition or a masterbatch in some cases.

For a kneader used in the kneading process of the production method for the polylactic acid resin composition, a continuous process or a batch process may be adopted. It is preferable to select an appropriate reaction process considering a device efficiency, properties and quality of a product, and the like.

Examples of the kneader include, but are not limited to, single-screw extruders, twin-screw extruders, kneaders, basket type shaftless stirring tanks, tube-type polymerization tanks including Sulzer SMI,X type static mixer.

Above all, twin-screw extruders are preferable in light of kneadability, productivity, resin color tone, stability, and heat resistance. Examples of the twin-screw extruders include, but are not limited to, a supercritical extrusion kneader manufactured by FLAVOR Research Laboratory of Plastics Technology Co., Ltd.

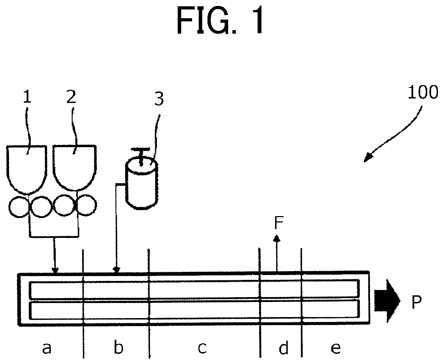

As an example of the kneader used in the present embodiment, a twin-screw extruder 100 is illustrated in FIG. 1. For example, the twin-screw extruder 100 has a screw diameter of 42 mm and a length/diameter ratio (L/D) of 48. In this example, for example, raw materials such as a polylactic acid resin pellet and a foam nucleating agent are fed to a raw material mixing/melting area a from a first feeder 1 and a second feeder 2, and mixed and melted. A compressible fluid is fed to the mixed/melted raw materials by a compressible fluid feeder 3 in a compressible fluid feeding area b. Then, the mixture containing the compressible fluid is kneaded in a kneading area c. Subsequently, the compressible fluid is removed from the mixture in a compressible fluid removing area d, and then, for example, the mixture is pelletized into a resin pellet P in a forming area e. In this way, a masterbatch can be prepared as a resin composition precursor.

For example, the cooled and liquified compressible fluid is fed by a metering pump, and the solid raw materials such as a resin pellet and a foam nucleating agent are fed e.g. by a fixed-quantity feeder.

Next, a process performed in each area of the kneader illustrated in FIG. 1 will be described.

- Raw Material Mixing/Melting Area -

In the raw material mixing/melting area a, the resin pellet and the foam nucleating agent are mixed and heated. The heating temperature is set to be not lower than the melting temperature of the resin so that the raw materials can be uniformly mixed with a compressible fluid F in the subsequent compressible fluid feeding area b.

- Compressible Fluid Feeding Area -

In the compressible fluid feeding area b, the compressible fluid F is fed to the resin pellet melted by heating to plasticize the melted resin.

- Kneading Area -

In the kneading area c, the temperature of the kneading area is set such that the viscosity is suitable for kneading the foam nucleating agent. The preset temperature is not particularly limited and can be changed as appropriate because the temperature varies depending on specifications of a reactor, as well as a type, a structure and a molecular weight of the resin, and the like. For example, when using a commercially available polylactic acid resin having a weight average molecular weight (Mw) of about 200,000, the kneading is commonly carried out at a temperature higher by 10°C to 20°C than the melting point of the polylactic acid resin.

On the other hand, the present embodiment is characterized in that the kneading is carried out at a temperature within a range including a temperature lower than the melting point of the polylactic acid resin, and the kneading is thereby possible at a relatively high viscosity at a temperature lower than the melting point of the polylactic acid resin. Specifically, the minimum preset temperature in the kneading area is set to a temperature lower by 0°C to 60°C, more preferably 0°C to 20°C, than the melting point. For simplicity, the temperature should be set with reference to a current value of a stirring power of the device, or the like. It can be said that the present embodiment makes it easy to achieve these preset value ranges. The melting point of the polylactic acid refers to a peak top temperature of an endothermic peak observed in a temperature range above the glass transition point by performing the scanning again from 25°C to 200°C at a temperature rising rate of 10°C/min after the first cooling in the aforementioned DSC measurement. The polylactic acid resin according to the present embodiment has a melting point within a range of about 150°C to 180°C.

<<Foam Sheet Forming Device>>

Next, a foam sheet is produced using a foam sheet forming device. As the foam sheet forming device, for example, the device described as an example in the above explanation for the kneader can be used. The kneader and the foam sheet forming device may be integrated as one device, or used as separate devices.

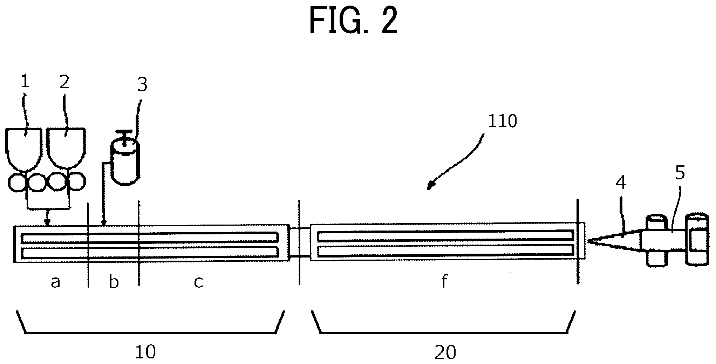

FIG. 2 is a diagram illustrating a continuous foam sheet forming device 110 as an example of the foam sheet forming device. For the continuous foam sheet forming device 110, for example, a twin-screw extruder can be used as described above. In the continuous foam sheet forming device 110, for example, raw materials such as a master batch, a polylactic acid resin, and a chain extender are fed to the raw material mixing/melting area a from the first feeder 1 and the second feeder 2, and mixed and melted. A compressible fluid is fed to the mixed/melted raw materials by the compressible fluid feeder 3 in the compressible fluid feeding area b.

Then, the raw materials are kneaded in the kneading area c to obtain a polylactic acid resin composition. Subsequently, the polylactic acid resin composition is fed to the heating area f, where the composition is heated and kneaded, then e.g. exposed to the atmosphere to extrusion-foam the composition. The extrusion-foamed foam sheet 4 is wound up along a mandrel 5.

In the continuous foam sheet forming device 110, a device portion including the raw material mixing/melting area a, the compressible fluid feeding area b, and the kneading area c is also referred to as a first extruder 10, and a device portion including the heating area f is also referred to as a second extruder 20. In this example, the mixed, melted, and kneaded raw materials are extruded to the second extruder 20 by the first extruder 10, and the foam sheet is extrusion-foamed by the second extruder 20. In the second extruder 20, for example, a circular die can be used.

In these examples, the kneading process is performed by the kneader 100 and the first extruder 10 of the foam sheet forming device 110, and the foaming process described below is performed by the second extruder 20 of the foam sheet forming device 110. However, embodiments of the present invention are not limited to these configurations. For example, an area where the kneading process and the foaming process are performed can be changed as appropriate.

<<Foaming Agent>>

There are two foaming types: a physical foaming and a chemical foaming. The clean physical foaming with little residue on the foam sheet is widely used. Production methods for foam sheets, using carbon dioxide or nitrogen as physical foaming agents having no odor, high operation safety, and low environmental load, are also known.

Examples of the physical foaming agents include, but are not limited to, a hydrocarbon e.g. a lower alkane such as propane, n-butane, isobutane, n-pentane, isopentane, and hexane; an ether such as dimethyl ether; a halogenated hydrocarbon such as methyl chloride and ethyl chloride; carbon dioxide; and nitrogen.

Above all, carbon dioxide or nitrogen is desirably used in terms of handleability, no odor, and low environmental load.

Aliphatic polyesters tend to have a low melt viscosity, and when aliphatic polyesters are kneaded with a filler such as inorganic particles, the filler tends to aggregate. The influence of the low melt viscosity is remarkable when the filler size is small or when a highly hydrophobic filler is used as in the present embodiment.

In the present embodiment, the polylactic acid is kneaded with a compressible fluid to uniformly disperse the filler in the polylactic acid. When the compressible fluid also serves as the foaming agent, kneading of the filler and foaming can be carried out in one process, and therefore this process is preferable as a production form from the viewpoint of reducing the environmental load.

A reason why that it is preferable to use a compressible fluid for kneading the inorganic particles and the polylactic acid resin will be described below.

In general, it is known that a resin impregnated with a compressible fluid decreases in a melt viscosity (see " Latest Applied Technology for Supercritical Fluid", NTS Inc.). However, in the kneading process, the higher melt viscosity of the resin is preferable from the viewpoint of dispersion, because a high shear force can be acted on the filler to facilitate refinement of agglomerates.

Thus, the decreased melt viscosity of the resin due to the impregnation with the compressible fluid seems to be inconsistent with the improvement in kneadability. Actually, a pressure is applied using no compressible fluid in kneading a general filler in some cases, but this process is aimed to decrease a free volume of the resin to increase an interaction between resins (increase in viscosity), and therefore plasticization of the resin has an opposite effect on the kneadability (see K. Yang, R. Ozisik R, "Polymer", 2006, volume 47, p. 2849).

The inventors of the present invention intensively studied utilization of the compressible fluid for kneading the polylactic acid particularly together with the foam nucleating agent. As a result of the study, it was found that, the viscosity of the polylactic acid could be suitable for the kneading at a temperature lower than the melting point of the polylactic acid in the presence of the compressible fluid, and the inorganic particles could be uniformly dispersed. In the past, when kneading the polylactic acid and the foam nucleating agent, the kneading could be carried out only in an area with a low melt viscosity at a temperature equal to or higher than the melting point of the polylactic acid, meanwhile, in the present embodiment, kneading can be carried out at a high viscosity at a temperature lower than the melting point of the polylactic acid using the compressible fluid, and therefore the dispersibility of the foam nucleating agent can be further improved.

Examples of substances that can be used in a state of the compressible fluid include, but are not limited to, carbon monoxide, carbon dioxide, dinitrogen monoxide, nitrogen, methane, ethane, propane, 2,3-dimethylbutane, ethylene, and dimethyl ether.

Above all, carbon dioxide is preferable from the viewpoint of incombustibility and handleability.

Each of these compressible fluids may be used alone or in combination of two or more types.

Since the solubility of the compressible fluid in the resin varies depending on a combination of a resin type and the compressible fluid, a temperature, and a pressure, an amount of the fed compressible fluid should be adjusted as appropriate. For example, in a case of a combination of polylactic acid and carbon dioxide, the amount of the fed carbon dioxide is preferably 2 parts by mass or more and 5 parts by mass or less based on 100 parts by mass of the composition (including polylactic acid, if necessary, foam nucleating agent, chain extender, etc.). If the amount of the supplied carbon dioxide is 2 parts by mass or more, it is possible to prevent defects of a limited plasticization effect and an increased cell diameter. If the amount of the fed carbon dioxide is 5 parts by mass or less, it is possible to prevent poor surface properties due to rapid foaming.

<Foaming Process>

In the foaming process, bubbles are generated in the polylactic acid resin composition by vaporizing the compressible fluid dissolved in the resin composition.

It is understood that, in the foaming process, when the compressible fluid dissolved in the resin composition becomes supersaturated by the lowered solubility of the compressible fluid due to depressurization, heating, or the like, foam nucleation is caused mainly in the resin (uniform nucleation) or on the interface with the foam nucleating agent (non-uniform nucleation), and the foam nuclei grow into bubbles by diffusion of the compressible fluid dissolved in the resin composition to obtain a foam. In a case of a small amount of foaming agent and a low degree of supersaturation as in the present embodiment, foaming occurs mainly from the foam nucleating agent. Thus, a foam sheet having uniform and fine cells can be produced after the foam nucleating agent is uniformly dispersed in the polylactic acid resin composition. If the degree of supersaturation is sufficiently high owing to a large amount of foaming agent, or the like, uniform and fine cells can be achieved because a sufficiently large amount of foam nuclei are formed even without the foam nucleating agent. However, when a large amount of foaming agent is contained, foaming tends to rapidly occur to impair the surface properties of the foam sheet.

Even if the foaming nucleating agent is not used, a foam sheet with uniform and fine cells can be produced because a small amount of crystals generated in the kneading area act substantially as a foam nucleating agent.

However, the method of adding the foam nucleating agent is preferable because it is extremely difficult to control crystallization, furthermore the fluidity of the resin composition is lowered by excessive progression of crystallization, which may lead to difficulty in the extrusion process and the foaming itself.

<Other Processes>

Other processes are not particularly limited as long as the processes can be performed for producing a conventional foam sheet. The process can be selected as appropriate depending on an intended purpose, and examples of other processes include, but are not limited to, a forming process in which the resin composition is processed into a sheet shape.

Examples of the aforementioned forming process include, but are not limited to, vacuum forming, pressure forming, and press forming.

The forming processes make it possible to obtain a sheet-formed product.

The weight average molecular weight of the polylactic acid resin composition and the hydrophobicity of the inorganic particles in the foam sheet can be confirmed as follows.

(Weight Average Molecular Weight of Polylactic Acid Resin)

The foam sheet is dissolved in a solvent, and the solvent is filtered to obtain a liquid containing a polylactic acid resin.

This liquid is subjected to an analysis to determine a weight average molecular weight of the polylactic acid resin. Since the inorganic particles are solid, the inorganic particles do not affect the weight average molecular weight measurement.

(Hydrophobicity of Inorganic Particle)

The foam sheet is dissolved in chloroform, to which a sodium hydroxide solution is added.

The solution separates into a chloroform layer and a sodium hydroxide aqueous solution layer.

The polylactic acid is decomposed and transferred to the sodium hydroxide layer. The inorganic particles are transferred to the chloroform layer. At this time, organic crosslinkers and lubricants are also transferred to the chloroform layer.

Subsequently, the chloroform layer is then taken out and dried.

The residue left by drying is placed on a filter and washed with an organic solvent.

The inorganic particles do not dissolve and therefore remain on the filter, and other components are excluded as a wash liquid.

The hydrophobicity of the inorganic particles on the filter is measured.

Examples

Examples of embodiments of the present invention will be described below. However, embodiments of the present invention are not limited to these examples.

"Parts" represents "parts by mass", and "%" represents "% by mass" unless otherwise specified in the following description.

[Example 1]

<Preparation of Foam Sheet>

Using a tandem-type continuous foam sheet forming device 110 illustrated in FIG. 2, 98.1 parts of polylactic acid resin (REVODE 190, manufactured by Zhejiang Hisun), 1 part of inorganic particles (RY 300, manufactured by NIPPON AEROSIL Co., LTD), and 0.9 part of chain extender (JONCRYL ADR4468, manufactured by BASF SE) were fed to a raw material mixing/melting area a of the first extruder 10 such that a rate of feeding the polylactic acid resin composition including the polylactic acid resin, the inorganic particles, and the chain extender was 20 kg/h.

Then, carbon dioxide was fed at 0.96 kg/h (equivalent to 4.8 parts based on 100 parts of the polylactic acid resin composition) to the compressible fluid feeding area b of the first extruder 19, and these components were mixed, melted, and kneaded in the heating area c, and fed to the second extruder 20.

Subsequently, the polylactic acid resin composition was cooled in the heating area f of the second extruder 20 until the resin temperature reached 160°C, and then extrusion-foamed by being discharged to the atmosphere from a circular die having a slit diameter of 70 mm and a gap of 0.5 mm attached to the distal end of the second extruder.

The obtained hollow-cylindrical polylactic acid-based resin foam sheet was arranged along a cooled mandrel 5, and forcibly cooled by blowing air to an outer surface of the sheet, and cut by a rotary blade type cutter to form a flat sheet-shaped foam.

A temperature in each area was as follows.

Raw material mixing/melting area a of first extruder: 200°C
Compressible fluid feeding area b of first extruder: 200°C
The kneading area c of first extruder: 200°C
Heating area f of second extruder: 200°C to 160°C
Circular die: 160°C

A pressure in each area was as follows.

Compressible fluid feeding area b of first extruder: 7 MPa to 10 MPa
Kneading area c of first extruder: 8 MPa to 20 MPa
Heating area f of second extruder: 8 MPa to 35 MPa

[Examples 2 to 17, and Comparative Examples 1 to 19]

Foam sheets of Examples 2 to 17 and Comparative Examples 1 to 19 were prepared in the same manner as in Example 1, except that foam sheets were prepared using the formulations presented in Tables 1 to 5.

The difference of each of Examples and Comparative Examples from Example 1 is as follows.

14

<Examples 2 to 4, and Comparative Examples 4 and 6 to 19>

Foam sheets of Examples 2 to 4, and Comparative Examples 4 and 6 to 19 were prepared in the same manner as in Example 1, except that type of the inorganic particles was changed (Examples 2 to 4, Comparative Examples 6 to 10), or no inorganic particles were used (Comparative Example 4) in the preparation of the foam sheet of Example 1.

<Examples 13 to 17>

Foam sheets were prepared in the same manner as in Example 1, except that the type and blending amount of the inorganic particles were changed in the preparation of the foam sheet of Example 1.

<Examples 10, and Comparative Examples 1 and 2>

Foam sheets of Example 10 and Comparative Examples 1 and 2 were prepared in the same manner as in Example 1, except that the weight average molecular weight of the polylactic acid resin was changed by changing the blending amount of the chain extender in the preparation of the foam sheet of Example 1.

<Examples 5 to 7>

Foam sheets of Examples 5 to 7 were prepared in the same manner as in Example 1, except that a cold crystallization enthalpy of the foam sheet was changed by increasing a mandrel temperature in an order of Examples 5, 6, and 7 and by blowing no air during cooling of the obtained hollow-cylindrical foam sheet in the preparation of the foam sheet of Example 1.

<Examples 8 and 9>

Foam sheets of Examples 8 and 9 were prepared in the same manner as in Example 1, except that the crystallinity of the polylactic acid was changed by using, as the polylactic acid resins, REVODE 110 manufactured by Zheijiang Hisun (Example 8) and LX-175 manufactured by Total Corbion PLA b.v. (Example 9) in the preparation of the foam sheet of Example 1.

<Example 12 and Comparative Example 5>

Foam sheets of Example 12 and Comparative Example 5 were prepared in the same manner as in Example 1, except that a feeding rate of the fed carbon dioxide was set to 1.1 kg/h (Example 12) and 1.3 kg/h (Comparative Example 5), a temperature of the heating area d of the second extruder was set to 200 to 150°C, a temperature of the circular die was set to 150°C (Example 12) and 145°C (Comparative Example 5), and no inorganic particles were used (Comparative Example 5) in the preparation of the foam sheet of Example 1.

<Comparative Example 3>

A foam sheet of Comparative Example 3 was prepared in the same manner as in Example 1, except that a temperature of the circular die was set to 165°C in the preparation of the foam sheet of Example 1.

[Evaluation for Physical Properties of Foam Sheet]

<Surface Property>

The surface properties of the obtained foam sheets were visually evaluated in accordance with the following criteria.

Good: Corrugation marks and obvious irregularities on the sheet surface are not observed.
Fair: Corrugation marks are nor observed, but obvious irregularities on the sheet surface are observed.
Poor: Corrugation marks (streak-like appearance defects that occur along the extrusion direction of the sheet) are observed.

<Heat Insulating Property>

The sheet was cut out into a 3 cm × 3 cm piece, which was placed on a hot plate heated to 100°C, and a duration during which the sheet could be touched by fingers was measured to confirm the heat insulating property. The results were evaluated in accordance with the following criteria.

(Evaluation Criteria)

Good: 10 seconds or longer
Fair: 5 seconds or longer and shorter than 10 seconds
Poor: shorter than 5 seconds

<Lightness>

Since it is known that there is a very good correlation between a bulk density of a sheet and a weight of a molded container, the bulk density of the sheet was measured and evaluated in accordance with the following criteria.

(Evaluation Criteria)

Good: Bulk density is lower than 0.31
Poor: Bulk density is higher than 0.31

<Moldability>

A box-shaped container of 150 mm (length) × 100 mm (width) × 50 mm (depth) was thermo-molded by a matched-mold type molding machine including upper and lower infrared (IR) heaters and a mold to obtain a molded body according to the present embodiment. A temperature of a preheater was set to 350°C, preheating was performed for 10 seconds, and then the foam sheet was vacuum-molded using a mold set to 110°C to obtain a molded body.
The molded body was visually evaluated for moldability in accordance with the following criteria.

(Evaluation Criteria)

Good: Molded body has no fracture and no edge rounding
Poor: Molded body has fracture or edge rounding

In Examples 5 and 6, a case of molding a 50 mm-depth container was rated as "Poor", and a case of molding a 20 mm-depth container was rated as "Good".
In Examples 8 and 9, the containers were rated as "Poor" under the molding conditions described above, but rated as "Good" by prolonging the duration during which the temperature was kept in the mold.
The containers in Examples 5, 6, 8, and 9 have lightweight but are excellent in the surface properties and the heat insulating property in common.

Table 1

| | Item | Unit | Example 1 | Example 2 | Example 3 | Example 4 | Example 5 | Example 6 | Example 7 | Example 8 | Example 9 |
|---|---|---|---|---|---|---|---|---|---|---|---|---|
| Composition | Polylactic acid resin | - | Revode 190 | Revode 190 | Revode 190 | Revode 190 | Revode 190 | Revode 190 | Revode 190 | Revode110 | LX-175 |
| | Ratio of polylactic acid resin | parts | 98.1 | 98.1 | 98.1 | 98.1 | 98.1 | 98.1 | 98.1 | 98.1 | 98.1 |
| | Optical purity | mol% | 99.5 | 99.5 | 99.5 | 99.5 | 99.5 | 99.5 | 99.5 | 96.2 | 96 |
| | Crosslinker-reactive group | - | Epoxy | Epoxy | Epoxy | Epoxy | Epoxy | Epoxy | Epoxy | Epoxy | Epoxy |
| | Amount of crosslinker | parts | 0.9 | 0.9 | 0.9 | 0.9 | 0.9 | 0.9 | 0.9 | 0.9 | 0.9 |
| | Foaming agent | - | $CO_2$ | $CO_2$ | $CO_2$ | $CO_2$ | $CO_2$ | $CO_2$ | $CO_2$ | $CO_2$ | $CO_2$ |
| | Amount of foaming agent | parts | 4.8 | 4.8 | 4.8 | 4.8 | 4.8 | 4.8 | 4.8 | 4.8 | 4.8 |
| | Type of inorganic particle | - | AEROSIL RY300 | AEROSIL VP-NKC130 | AEROSIL RY200 | AEROSIL RY200S | AEROSIL RY300 | AEROSIL RY300 | AEROSIL RY300 | AEROSIL RY300 | AEROSIL RY300 |
| | Surface treatment agent | - | Silicone oil | Hexadecyl silane | Silicone oil | Silicone oil | Silicone oil | Silicone oil | Silicone oil | Silicone oil | Silicone oil |
| | Addition amount of inorganic particle | parts | 1 | 1 | 1 | 1 | 1 | 1 | 1 | 1 | 1 |
| | Hydrophobicity | - | 67.2 | 67.1 | 68.5 | 67.8 | 67.2 | 67.2 | 67.2 | 67.2 | 67.2 |
| | Carbon content | parts | 7.3 | 8.9 | 5 | 4.3 | 7.3 | 7.3 | 7.3 | 7.3 | 7.3 |

(continued)

| | Item | Unit | Example 1 | Example 2 | Example 3 | Example 4 | Example 5 | Example 6 | Example 7 | Example 8 | Example 9 |
|---|---|---|---|---|---|---|---|---|---|---|---|
| Physical property of Sheet | Weight average molecular weight/ 10,000 | - | 27 | 27 | 27 | 27 | 27 | 27 | 27 | 28 | 25 |
| | Bulk density | g/cm$^3$ | 0.25 | 0.25 | 0.25 | 0.25 | 0.25 | 0.25 | 0.25 | 0.25 | 0.25 |
| | Thickness | mm | 1.2 | 1.2 | 1.2 | 1.2 | 1.2 | 1.2 | 1.2 | 1.2 | 1.2 |
| | Cell diameter | $\mu$m | 121 | 98 | 148 | 180 | 150 | 150 | 150 | 150 | 150 |
| | Recrystallization enthalpy | J/g | 37 | 36 | 38 | 35 | 38 | 37 | 37 | 16 | 1.2 |
| | Cold crystallization enthalpy | J/g | 28 | 28 | 28 | 28 | 0 | 16 | 21 | 25 | 21 |
| Evaluation | Surface property | | Good | Good | Good | Good | Good | Good | Good | Good | Good |
| | Heat insulating property | | Good | Good | Good | Good | Good | Good | Good | Good | Good |
| | Lightness | | Good | Good | Good | Good | Good | Good | Good | Good | Good |
| | (Additional effect) Moldability | | Good | Good | Good | Good | Poor Fracture/ Edge | Poor Fracture/ Edge | Good | Poor Edge | Poor Edge |

Table 2

| | Item | Unit | Comparative Example 1 | Comparative Example 2 | Example 10 | Example 11 | Comparative Example 3 | Example 12 | Comparative Example 4 |
|---|---|---|---|---|---|---|---|---|---|
| Composition | Polylactic acid resin | - | Revode190 | Revode190 | Revode190 | Revode190 | Revode190 | Revode190 | Revode190 |
| | Ratio of polylactic acid resin | parts | 99 | 98.5 | 98.3 | 97.7 | 98.1 | 98.1 | 99.1 |
| | Optical purity | mol% | 99.5 | 99.5 | 99.5 | 99.5 | 99.5 | 99.5 | 99.5 |
| | Crosslinker-reactive group | - | Epoxy | Epoxy | Epoxy | Epoxy | Epoxy | Epoxy | Epoxy |
| | Amount of crosslinker | parts | 0 | 0.5 | 0.7 | 1.3 | 0.9 | 0.9 | 0.9 |
| | Foaming agent | - | $CO_2$ | $CO_2$ | $CO_2$ | $CO_2$ | $CO_2$ | $CO_2$ | $CO_2$ |
| | Amount of foaming agent | parts | 4.8 | 4.8 | 4.8 | 4.8 | 4.8 | 5.5 | 4.8 |
| | Type of inorganic particle | - | AEROSIL RY300 | AEROSIL RY300 | AEROSIL RY300 | AEROSIL RY300 | AEROSIL RY300 | AEROSIL RY300 | none |
| | Surface treatment agent | - | Silicone oil | Silicone oil | Silicone oil | Silicone oil | Silicone oil | Silicone oil | - |
| | Addition amount of inorganic particle | parts | 1 | 1 | 1 | 1 | 1 | 1 | 0 |
| | Hydrophobicity | - | 67.2 | 67.2 | 67.2 | 67.2 | 67.2 | 67.2 | - |
| | Carbon content | parts | 7.3 | 7.3 | 7.3 | 7.3 | 7.3 | 7.3 | - |

(continued)

| | Item | Unit | Comparative Example 1 | Comparative Example 2 | Example 10 | Example 11 | Comparative Example 3 | Example 12 | Comparative Example 4 |
|---|---|---|---|---|---|---|---|---|---|
| Physical property of Sheet | Weight average molecular weight/ 10,000 | - | 17 | 23 | 25 | 35 | 27 | 27 | 28 |
| | Bulk density | g/cm$^3$ | 0.63 | 0.42 | 0.25 | 0.25 | 0.42 | 0.06 | 0.25 |
| | Thickness | mm | 0.48 | 0.72 | 1.2 | 1.2 | 0.72 | 3.2 | 1.2 |
| | Cell diameter | $\mu$m | <1000 | <1000 | 1 | 119 | 138 | 92 | 680 |
| | Recrystallization enthalpy | J/g | 39 | 38 | 37 | 35 | 35 | 34 | 35 |
| | Cold crystallization enthalpy | J/g | 22 | 26 | 28 | 29 | 30 | 20 | 30 |
| Evaluation | Surface property | | Good | Good | Good | Good | Good | Good | Fair |
| | Heat insulating property | | Poor | Poor | Good | Good | Poor | Good | Poor |
| | Lightness | | Poor | Poor | Good | Good | Poor | Good | Good |
| | (Additional effect) Moldability | | Good | Good | Good | Good | Good | Good | Good |

Table 3

| | Item | | Unit | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|
| Composition | | Polylactic acid resin | - | Revode 190 | Revode 190 | Revode 190 | Revode 190 | Revode190 | Revode190 | Revode190 |
| | | Ratio of polylactic acid resin | parts | 99.1 | 98.1 | 98.1 | 98.1 | 98.1 | 98.1 | 98.1 |
| | | Optical purity | mol% | 99.5 | 99.5 | 99.5 | 99.5 | 99.5 | 99.5 | 99.5 |
| | | Crosslinker-reactive group | - | Epoxy | Epoxy | Epoxy | Epoxy | Epoxy | Epoxy | Epoxy |
| | | Amount of crosslinker | parts | 0.9 | 0.9 | 0.9 | 0.9 | 0.9 | 0.9 | 0.9 |
| | | Foaming agent | - | $CO_2$ | $CO_2$ | $CO_2$ | $CO_2$ | $CO_2$ | $CO_2$ | $CO_2$ |
| | | Amount of foaming agent | parts | 6.5 | 4.8 | 4.8 | 4.8 | 4.8 | 4.8 | 4.8 |
| | | Type of inorganic particle | - | none | AEROSIL 130 | AEROSIL 200 | AEROSIL 300 | AEROSIL R972 | AEROSIL R974 | AEROSIL NX130 |
| | | Surface treatment agent | - | - | - | - | - | Dmethyldichlorosilane | Dmethyldichlorosilane | Hexamethyldisilazane |
| | | Addition amount of inorganic particle | parts | 0 | 1 | 1 | 1 | 1 | 1 | 1 |
| | | Hydrophobicity | - | - | 0 | 0 | 0 | 53.3 | 56 | 66.8 |
| | | Carbon content | parts | - | 0 | 0 | 0 | 0.9 | 1.1 | 1.5 |

(continued)

| Item | | Unit | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|
| Physical property of Sheet | Weight average molecular weieht/ 10,000 | - | 28 | 26 | 28 | 28 | 27 | 28 | 26 |
| | Buk density | g/cm³ | 0.05 | 0.25 | 0.25 | 0.25 | 0.25 | 0.25 | 0.42 |
| | Thickness | mm | 3.128 | 1.2 | 1.2 | 1.2 | 1.2 | 1.2 | 0.72 |
| | Cell diameter | μm | 68 | 580 | 527 | 550 | 508 | 489 | 145 |
| | Recrystallization enthalpy | J/g | 34 | 34 | 34 | 34 | 38 | 36 | 34 |
| | Cold crystallization enthalpy | J/g | 12 | 30 | 30 | 30 | 30 | 30 | 30 |
| Evaluation | Surface property | | Poor | Fair | Fair | Fair | Fair | Fair | Fair |
| | Heat insulating property | | Good | Poor | Poor | Poor | Poor | Poor | Poor |
| | Lightness | | Good | Good | Good | Good | Good | Good | Poor |
| | (Additional effect) Moldability | | Poor Fracture | Good | Good | Good | Good | Good | Good |

Table 4

| Item | | Unit | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|
| Composition | Polylactic acid resin | - | Revode 190 | Revode 190 | Revode 190 | Revode 190 | Revode 190 | Revode 190 | Revode 190 |
| | Ratio of polylactic acid resin | parts | 98.1 | 98.1 | 98.1 | 98.1 | 98.1 | 98.1 | 98.1 |
| | Optical purity | mol% | 99.5 | 99.5 | 99.5 | 99.5 | 99.5 | 99.5 | 99.5 |
| | Crosslinker-reactive group | - | Epoxy | Epoxy | Epoxy | Epoxy | Epoxy | Epoxy | Epoxy |
| | Amount of crosslinker | parts | 0.9 | 0.9 | 0.9 | 0.9 | 0.9 | 0.9 | 0.9 |
| | Foaming agent | - | $CO_2$ | $CO_2$ | $CO_2$ | $CO_2$ | $CO_2$ | $CO_2$ | $CO_2$ |
| | Amount of foaming agent | parts | 4.8 | 4.8 | 4.8 | 4.8 | 4.8 | 4.8 | 4.8 |
| | Type of inorganic particle | - | AEROSIL RX130 | AEROSIL REA200 | AEROSIL R504 | AEROSIL R805 | NIPPON TALC SG-2500 | AEROSIL P25 | AEROSIL T805 |
| | Surface treatment agent | - | Hexamethyldisilazane | Alkylaminosilane | Hexamethyldisilazane aminosilane | Octylsilane | - | - | Octylsilane |
| | Addition amount of inorganic particle | parts | 1 | 1 | 1 | 1 | 1 | 1 | 1 |
| | Hydrophobicity | - | 67.7 | 48 | 37 | 58 | 0 | 0 | 45 |
| | Carbon content | parts | 2.5 | 6.3 | 3.3 | 5.5 | 0 | 0 | 3.2 |

EP 4 249 544 A1

(continued)

| | Item | Unit | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|
| Physical property of Sheet | Weight average molecular weight/ 10,000 | - | 27 | 27 | 28 | 28 | 26 | 28 | 26 |
| | Bulk density | g/cm$^3$ | 0.42 | 0.25 | 0.25 | 0.25 | 0.25 | 0.25 | 0.25 |
| | Thickness | mm | 0.72 | 1.2 | 1.2 | 1.2 | 1.2 | 1.2 | 1.2 |
| | Cell diameter | μm | 136 | 552 | 553 | 510 | 485 | 533 | 551 |
| | Recrystallization enthalpy | J/g | 35 | 37 | 34 | 34 | 38 | 38 | 37 |
| | Cold crystallization enthalpy | J/g | 30 | 30 | 30 | 30 | 30 | 30 | 30 |
| Evaluation | Surface property | | Fair | Fair | Fair | Fair | Fair | Fair | Fair |
| | Heat insulating property | | Poor | Poor | Poor | Poor | Poor | Poor | Poor |
| | Lightness | | Poor | Good | Good | Good | Good | Good | Good |
| | (Additional effect) Moldability | | Good | Good | Good | Good | Good | Good | Good |

Table 5

| Item | | Unit | Comparative Example 19 | Example 13 | Example 14 | Example 15 | Example 16 | Example 17 |
|---|---|---|---|---|---|---|---|---|
| Composition | Polylactic acid resin | - | Revode 190 | Revode 190 | Revode 190 | Revode 190 | Revode 190 | Revode 190 |
| | Ratio of polylactic acid resin | parts | 98.1 | 98.85 | 98.6 | 96.6 | 98.85 | 98.6 |
| | Optical purity | mol% | 99.5 | 99.5 | 99.5 | 99.5 | 99.5 | 99.5 |
| | Crosslinker-reactive group | - | Epoxy | Epoxy | Epoxy | Epoxy | Epoxy | Epoxy |
| | Amount of crosslinker | parts | 0.9 | 0.9 | 0.9 | 0.9 | 0.9 | 0.9 |
| | Foaming agent | - | $CO_2$ | $CO_2$ | $CO_2$ | $CO_2$ | $CO_2$ | $CO_2$ |
| | Amount of foaming agent | parts | 4.8 | 4.8 | 4.8 | 4.8 | 4.8 | 4.8 |
| | Type of inorganic particle | - | AEROSIL Alu C805 | AEROSIL RY300 | AEROSIL RY300 | AERO SIL RY300 | AERO SIL RY200S | AERO SIL RY200S |
| | Surface treatment agent | - | Octylsilane | Silicone oil | Silicone oil | Silicone oil | Silicone oil | Silicone oil |
| | Addition amount of inorganic particle | parts | 1 | 0.25 | 0.5 | 2.5 | 0.25 | 0.5 |
| | Hydrophobicity | - | 54 | 67.2 | 67.2 | 67.2 | 67.8 | 67.8 |
| | Carbon content | parts | 4 | 7.3 | 7.3 | 7.3 | 4.3 | 4.3 |
| Physical property of Sheet | Weight average molecular weight/10,000 | - | 26 | 27 | 26 | 27 | 28 | 27 |
| | Bulk density | g/cm$^3$ | 0.25 | 0.25 | 0.25 | 0.31 | 0.25 | 0.25 |
| | Thickness | mm | 1.2 | 1.2 | 1.2 | 1 | 1.2 | 1.2 |
| | Cell diameter | μm | 494 | 136 | 158 | 120 | 375 | 198 |
| | Recrystallization enthalpy | J/g | 36 | 36 | 37 | 38 | 36 | 37 |
| | Cold crystallization enthalpy | J/g | 30 | 27 | 28 | 23 | 27 | 28 |

(continued)

| Item | | Unit | Comparative Example 19 | Example 13 | Example 14 | Example 15 | Example 16 | Example 17 |
|---|---|---|---|---|---|---|---|---|
| Evaluation | Surface property | | Fair | Good | Good | Good | Good | Good |
| | Heat insulating property | | Poor | Good | Good | Fair | Fair | Good |
| | Lightness | | Good | Good | Good | Good | Good | Good |
| | (Additional effect) Moldability | | Good | Good | Good | Good | Good | Good |

For example, embodiments of the present invention are as described below.

(1) A polylactic acid resin composition containing a polylactic acid resin and inorganic particles, in which the polylactic acid resin composition has a weight average molecular weight of 250,000 to 600,000, and the inorganic particles have a hydrophobicity of 65% by volume or higher and a carbon content of 4% by mass or more.

(2) The polylactic acid resin composition according to (1), in which the inorganic particles comprise surface-treated inorganic particles surface-treated with at least one selected from the group consisting of organopolysiloxane, and alkylsilane having 16 or more carbon atoms.

(3) The polylactic acid resin composition according to (1) or (2), in which the inorganic particles have a hydrophobicity of 65% by volume or higher and 70% by volume or lower and a carbon content of 4% by mass or more and 8% by mass or less.

(4) The polylactic acid resin composition according to any one of (1) to (3), in which a content of the inorganic particles in the polylactic acid resin composition is 0.25% by mass or more and 2.5% by mass or less.

(5) The polylactic acid resin composition according to any one of (1) to (4), in which a content of the polylactic acid resin in the polylactic acid resin composition is 95% by mass or more.

(6) A foam sheet including the polylactic acid resin composition according to any of (1) to (5), in which the foam sheet has a bulk density of 0.03 g/cm$^3$ or higher and 0.31 g/cm$^3$ or lower.

(7) The foam sheet according to (6), in which the foam sheet has a recrystallization enthalpy of 30 J/g or higher and a cold crystallization enthalpy of 20 J/g or higher, as measured by a differential scanning calorimetry (DSC) at a temperature rising/dropping rate of 10°C/min.

(8) The foam sheet according to (6) or (7), wherein the foam sheet has a cell diameter of 300 $\mu$m or smaller.

(9) A method for producing the foam sheet according to any one of (6) to (8), including:

kneading a polylactic acid resin, inorganic particles, and a chain extender in the presence of a compressible fluid at a temperature lower than a melting point of the polylactic acid resin to obtain a polylactic acid resin composition; and

vaporizing the compressible fluid from the polylactic acid resin composition to foam the polylactic acid resin composition.

(10) The method according to (9), in which the compressible fluid is carbon dioxide.

(11) A product including the foam sheet according to any one of (6) to (8).

(12) A molded body, formed by thermo-molding the foam sheet according to any one of (6) to (8).

Any one of the above-described operations may be performed in various other ways, for example, in an order different from the one described above.

## Claims

1. A polylactic acid resin composition comprising:

   a polylactic acid resin; and
   inorganic particles,
   wherein the polylactic acid resin composition has a weight average molecular weight of 250,000 to 600,000, and the inorganic particles have a hydrophobicity of 65% by volume or higher and a carbon content of 4% by mass or more.

2. The polylactic acid resin composition according to claim 1, wherein the inorganic particles comprise surface-treated inorganic particles surface-treated with at least one selected from the group consisting of organopolysiloxane, and alkylsilane having 16 or more carbon atoms.

3. The polylactic acid resin composition according to claim 1 or 2, wherein the inorganic particles have a hydrophobicity of 65% by volume or higher and 70% by volume or lower and a carbon content of 4% by mass or more and 8% by mass or less.

4. The polylactic acid resin composition according to any one of claims 1 to 3, wherein a content of the inorganic particles in the polylactic acid resin composition is 0.25% by mass or more and 2.5% by mass or less.

5. The polylactic acid resin composition according to any one of claims 1 to 4, wherein a content of the polylactic acid resin in the polylactic acid resin composition is 95% by mass or more.

6. A foam sheet comprising:

   the polylactic acid resin composition according to any one of claims 1 to 5,
   wherein the foam sheet has a bulk density of 0.03 $g/cm^3$ or higher and 0.31 $g/cm^3$ or lower.

7. The foam sheet according to claim 6, wherein the foam sheet has a recrystallization enthalpy of 30 J/g or higher and a cold crystallization enthalpy of 20 J/g or higher, as measured by a differential scanning calorimetry at a temperature rising/dropping rate of 10°C/min.

8. The foam sheet according to claim 6 or 7, wherein the foam sheet has a cell diameter of 300 $\mu$m or smaller.

9. A method for producing the foam sheet according to any one of claims 6 to 8, the method comprising:

   kneading a polylactic acid resin, inorganic particles, and a chain extender in the presence of a compressible fluid at a temperature lower than a melting point of the polylactic acid resin to obtain a polylactic acid resin composition; and
   vaporizing the compressible fluid from the polylactic acid resin composition to foam the polylactic acid resin composition.

10. The method according to claim 9, wherein the compressible fluid is carbon dioxide.

11. A product comprising the foam sheet according to any one of claims 6 to 8.

12. A molded body, formed by thermo-molding the foam sheet according to any one of claims 6 to 8.

# FIG. 1

FIG. 2

Europäisches
Patentamt

European
Patent Office

Office européen
des brevets

# EUROPEAN SEARCH REPORT

**Application Number**

EP 23 16 3672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/152388 A1 (RICOH CO LTD [JP]; NEMOTO TAICHI [JP]; NOZAKI CHIYOSHI [JP]) 5 August 2021 (2021-08-05) * claims 1, 3; examples 1, 10-15 * ----- | 1-12 | INV. C08J9/00 C08J9/12 C08J9/36 |

**TECHNICAL FIELDS SEARCHED (IPC)**

C08J

The present search report has been drawn up for all claims

| Place of search | Date of completion of the search | Examiner |
|---|---|---|
| The Hague | 19 July 2023 | Mayer, Anne |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 3672

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2023

| Patent document cited in search report | Publication date | Patent family member(s) | Publication date |
|---|---|---|---|
| WO 2021152388 A1 | 05-08-2021 | CN 115003738 A | 02-09-2022 |
| | | EP 4097171 A1 | 07-12-2022 |
| | | US 2023076268 A1 | 09-03-2023 |
| | | WO 2021152388 A1 | 05-08-2021 |

EPO FORM P0459

For more details about this annex : see Official Journal of the European Patent Office, No. 12/82

## REFERENCES CITED IN THE DESCRIPTION

**Patent documents cited in the description**

- JP 2021116412 A

**Non-patent literature cited in the description**

- **K. YANG ; R. OZISIK R.** *Polymer,* 2006, vol. 47, 2849